# EUROPEAN PATENT APPLICATION

(11) **EP 1 189 196 A2**
(43) Date of publication of application: **20.03.2002**
(21) Application number: 01660166.8
(22) Date of filing: 14.09.2001
(51) Int. Cl.: G09G 5/00

(54) **Method for displaying an information element, and an electronic device**

(30) Priority: 18.09.2000 FI 20002048
(71) Applicant: Nokia Corporation, 02150 Espoo (FI)
(72) Inventor: Laurikka, Salla, 33900 Tampere (FI); Pirskanen, Hannu, 90540 Oulu (FI); Ruutikainen, Petri, 33100 Tampere (FI); Pirkola, Jani, 90230 Oulu (FI)
(74) Representative: Pursiainen, Timo Pekka

(57) **Abstract**

The invention relates to a method for forming at least one information element on the display device of an electronic device. A presentation format specified for the information element is used in the formation of the information element. Furthermore, at least one change condition is determined for at least one information element, wherein when said change condition is fulfilled, at least one visual property of the information element is changed.

## Description

The present invention relates to a method according to the preamble of the appended claim 1 for forming an information element. The invention also relates to an electronic device according to the preamble of the appended claim 12.

At present, a display device is used in many electronic devices for presenting visual information. For example in data processing devices, such as personal computers and wireless communication devices comprising data processing properties, a display device can be used for presenting icons or information elements, by means of which the user can, for instance, activate different application programs, such as calendar applications, notebook applications, calculator applications and telephone index applications, etc. Furthermore, in some devices it is possible to conduct telephone functions from such an information element. Information elements can also be used for presenting other kind of information. For example in a wireless communication device, an incoming call can be indicated by forming an information element representing the same on the display device.

In prior art devices the information element is primarily formed in such a manner that presentation information is stored in the electronic device, on the basis of which the electronic device controls the picture elements, i.e. so-called pixels of the display device. These pixels are typically composed of three colour elements: red (R), green (G) and blue (B). When one wishes to present the information element at a particular point of location on the display device, the electronic device retrieves the presentation information of the information element and changes the brightness of the colour elements at a desired point on the basis of the retrieved presentation information. Thus, the user can, for example by means of a control device, activate the function corresponding to the information element, e.g. start a calendar application or answer an incoming call.

There is known office software intended to be used in a data processor, in which the information element is used as a certain kind of office assistant. This assistant for example gives instructions suitable for different situations, reports on erroneous actions of the user, etc.

One drawback in such prior art information elements is, for instance, that the size of a single information element cannot be changed. In some computer systems it is possible to change the size of the information element, but in that case the size of all information elements presented on the display device is changed in accordingly. In portable data processors of prior art in which information elements are used, the information elements have a fixed location and size, due to the limited scope of the display device. Another drawback in solutions of prior art is that on the display device the information element conceals all the information remaining underneath the information element, i.e. the information element is non-transparent.

One purpose of the present invention is to produce a method which is more flexible than prior art methods to form at least partly transparent information element, as well as an electronic device, especially a wireless communication device, in which the method can be advantageously applied. The invention is based on the idea that at least one visual property, such as size, colour and/or location of the information element can be changed. Furthermore, the information element can be formed in such a manner that it becomes partly transparent, wherein the information element does not conceal all the information remaining underneath the same. The method according to the present invention is primarily characterized in what will be presented in the characterizing part of the appended claim 1. The electronic device according to the present invention is primarily characterized in what will be presented in the characterizing part of the appended claim 12.

By means of the present invention, considerable advantages are achieved when compared to methods and electronic devices of prior art. When the method according to the invention is applied to form information elements, it is possible to present more information on the display device than when applying methods of prior art. By means of the visual change of the information element it is possible to improve the perceptivity of the information element, wherein the user can also better notice the information element and/or the visual change therein. Because the information element according to the invention is at least partly transparent, a further advantage that is attained is that the information presented on the display device at the location of the information element is not entirely concealed, but it can still be discerned at least partly. This transparent nature and the fact that the location of the information element can be changed are advantageous for instance when the display device of the electronic device is relatively small.

In the following, the invention will be described in more detail with reference to the appended drawings, in which
- Fig. 1: shows an electronic device according to a preferred embodiment of the invention in a reduced block chart,
- Fig. 2: shows an example situation, in which information elements are presented on the display device of an electronic device by means of a method according to a preferred embodiment of the invention,
- Fig. 3: shows another example of a situation in which information elements are presented on the display device of an electronic device by means of a method according to a preferred embodiment of the invention, and
- Fig. 4: shows yet another example of information elements presented on the display device of an electronic device by means of a method according to a preferred embodiment of the invention.

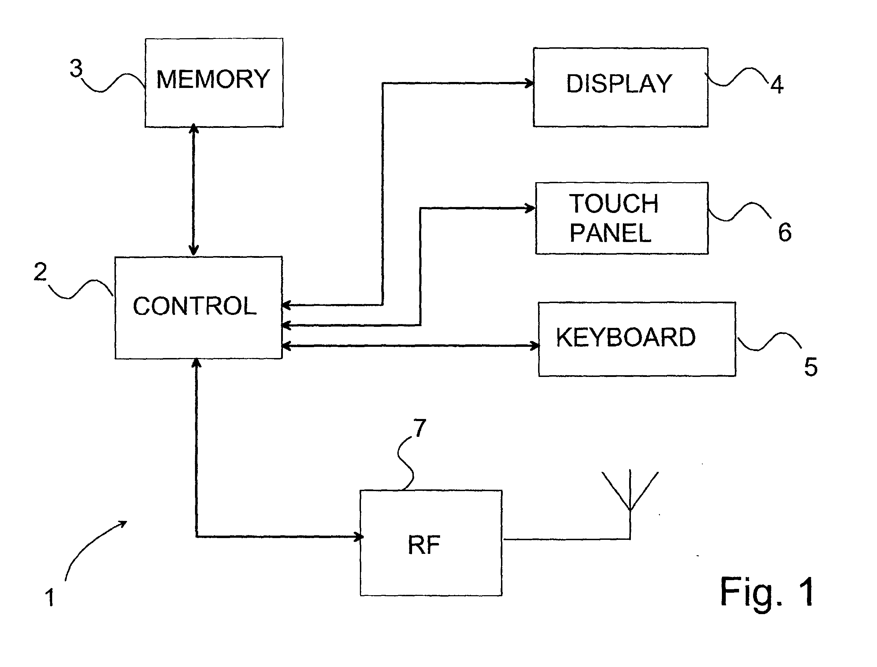

Figure 1 shows, in a reduced block chart, an electronic device 1, such as a wireless communication device, complying with a preferred embodiment of the invention. It advantageously comprises at least one processor 2, a memory 3, a display device 4, a keyboard 5, a control device 6 and a radio part 7. In a manner known as such, the memory 3 comprises non-volatile memory for instance for storing application programs, and data memory for storing information necessary during the operation of the electronic device 1. Presentation information necessary in the act of presenting different information elements and possibly also information indicating the point in the display device in which each information element is formed as a default value, is advantageously stored in the memory 3. The processor 2 is used for instance for controlling the presentation of information on the display device 4, the interpretation of the keystrokes of the keyboard 5, the control device 6 and the function of the radio part 7.

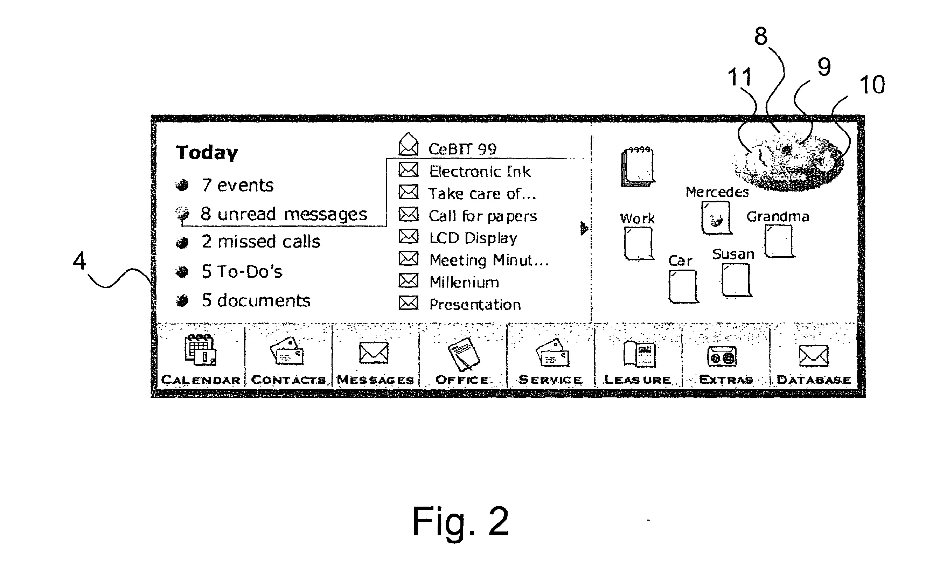

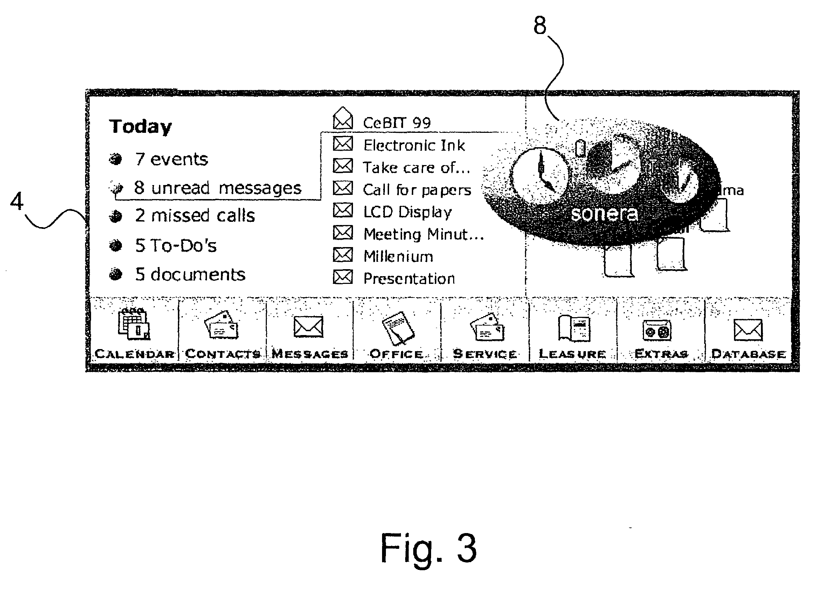

In the following, the function of a preferred embodiment of the invention will be described in an electronic device 1 according to Fig. 1 with reference to Figs. 2 and 3. Fig. 2 shows an example situation in which the display device 4 presents e.g. calendar information of a given day, and other state information, e.g. a notification of e-mail messages that have arrived. Furthermore, on the lower edge of the display device there are button functions by means of which the user can activate different application programs. In this example, the control device 6 comprises a touch panel, i.e. a touch screen arranged in connection with the display device 4, wherein the user can perform different kinds of functions, for example activate applications, by touching the touch panel.

In Fig. 2, the information element 8 represents an example of an information element according to the invention. In this example situation, the purpose of the information element 8 is to provide information on data related to telephone functions. This information element is presented on the display device 4 to indicate that the radio part of the electronic device is connected to a mobile communication network, wherein the electronic device 1 can be used for performing telephone functions, such as making a call and answering an incoming call. Furthermore, in the information element 8, symbols show the charge state of the battery (marked with the reference numeral 9), the field intensity 10 of the mobile communication network and a clock 11. On the basis of the size of the information element 8, the user can deduce that the telephone functions are in a standby state. In the situation of an incoming call, at least one visual property, e.g. the size and/or the colour of the information element 8 is changed. This is illustrated in Fig. 3, in which the information element 8 has been made larger in size. Thus, it is easier for the user to notice that a change of state has occurred in the telephone functions, for example that a call is coming.

The processor 2 can change the size of the information element 8 for example in such a manner that the processor uses the presentation information stored in the memory and scales this presentation information so that is becomes either larger or smaller in size according to the situation. In the act of changing the colour, it is also possible to use the same stored presentation information e.g. by changing the brightness ratio between different colour elements.

In the example situation of Fig. 3, the information element 8 conceals other information elements presented on the display device, but when the method according to the invention is applied, these information elements remaining underneath are not concealed under the changed information element 8, but they are less bright, i.e. the information element 8 is partly transparent. The transparency can be advantageously implemented in the following manner. The processor 2 examines which pixels are changed due to the change in the visual information of the information element 8. Thereafter the processor 2 determines the information contained in these pixels at that moment. The processor 2 reduces the level of brightness of these pixels and connects the information of the information element to be changed to the pixels, which results in that the changed information element 8 can be detected in a desired size and colour and in a determined point of location, and in addition, the information underneath can be discerned dimly.

It is obvious that the present invention can also be applied in connection of other kind of information than telephone functions. The user can, for example determine a reminder on a desired date, indicating, for example, the beginning of a meeting, reminding that a call should be made, or the like. When the user determines such a reminder s/he can advantageously use the keyboard or the control device 6 to determine in which point of the display device 4 this information element is presented. The processor 2 monitors the reminding times related to different reminders and compares them to the time passing by. At that stage when the reminding time determined for a reminder is reached, the processor 2 changes the visual appearance of the information element related to this reminder. To facilitate the act of detecting the change of state in the information element, it is possible to change the visual properties of the information element at fixed intervals to produce some kind of a blinking information element.

By means of the method according to the invention, the user can also be informed of the changes occurring in the electronic device 1, for example running down of the battery, changes in the field intensity of the mobile communication network and/or possible error situations. For example when the charge state of the battery is reduced below a preset value, the size and/or colour of the information element indicating the charge state of the battery can be advantageously changed, wherein the user can better notice the need to recharge the battery.

The method according to the invention can also be applied in such a manner that the size of the information element changes when the user touches it. Thus, the control device 6 detects the touch and information thereof is transmitted to the processor 2. The processor 2 detects this touch information and determines the location of the touch on the display device to find out which information element has been touched by the user. Thereafter the visual properties, advantageously the size of that information element which has been touched by the user are changed. When the user touches this information element again, the visual properties of the information element are advantageously restored to the original state. This above-described function can be utilized for example in such situations in which the amount of information presented simultaneously on the display device 4 is so large in relation to the size of the picture area of the display device that it is not possible to present all information clearly at the same time. Thus, the user can touch the desired information element, wherein it is enlarged to attain a better readability.

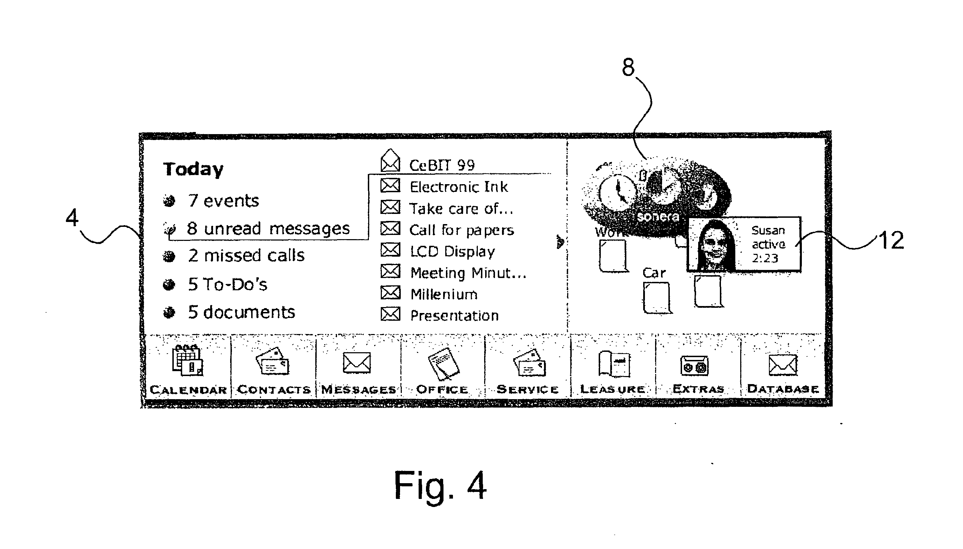

In a preferred embodiment of the invention, the information elements can also be supplemented with auxiliary functions 12 (plug-in). These plug-in functions can be used for example in connection with telephone functions to present the name, number and/or picture of the caller, wherein the user can easily determine the identity of the caller. Fig. 4 shows an example situation in which a call is active in the electronic device 1 and a picture and the name of the other party is shown in connection with the information element 8. This picture can be stored in the memory of the electronic device 1, from which the processor 2 advantageously retrieves the picture on the basis of the caller's telephone number. In some applications, the picture can also be transmitted from the telecommunication terminal of the other party, wherein the electronic device 1 receives the image information and presents it in connection with the information element 8.

As another example, the plug-in function to be used in connection with the information element according to a preferred embodiment of the invention can also be used in connection with the reminder function mentioned earlier in this description. The user can determine a plug-in function for the reminder, such as a telephone number, an agenda for a meeting, etc. When a reminder time has been fulfilled, the processor 2 forms an information element on the display device, or advantageously makes the information element already existing on the display device larger in size, the user being reminded of an event, such as making a call, by means of said information element. Thus, the user can for example touch this information element and thereby notify the electronic device 1 that a call can be set up. By means of the signal of the control device 6 the processor 2 discovers that the user has touched the information element indicating the reminder. As a result of this, the processor 2 activates a call set-up advantageously to a telephone number possibly given by the user at the stage of determining the reminder. Correspondingly, in a reminder related to a meeting, it is possible to show an agenda which has been stored by the user. At this stage the processor 2 can also change the visual appearance of the information element to denote that the processor 2 has detected the touch of the user and is about to start a call set-up. In this situation, it is also possible to show information e.g. on the telephone number to which the call is made, and/or the picture of the person who is being called in connection with the information element.

The display device 4 of the electronic device 1 is typically composed of picture elements (pixels) arranged in a matrix format. The number of the pixels primarily determines the resolution of the display. In a colour display the pixels comprise one colour element for each colour. Thus, in a RGB colour display each colour element is composed of three colour elements of different colours, the mutual brightness of which can be adjusted to produce different colours, which is known as such.

The presentation information of information elements is advantageously stored in a bit map format. Such a bitmap is composed of a group of matrix elements for which a relative location in the bitmap (coordinates) and a colour have been determined. At that stage in which the information element is formed on the display device 4, the processor 2 retrieves the bitmap information of the information element from the memory, and determines the point in which the information element is formed on the display device. On the basis of this, the processor 2 sets the brightness ratio of the colour elements of those pixels in the area of which the information element is formed on the basis of the values indicated by the bitmap and to produce transparency, also on the basis of the information located in the background at the moment of forming the information element, in such a manner that the desired visual impression is attained. When the size of the information element is changed, the same bitmap information is used, but then scaling is also conducted. The scaling can be conducted either to make the size of the information element larger, wherein one matrix element affects a larger area of pixels on the display device 4, or to make the size of the information element smaller, wherein one matrix element of the bitmap correspondingly affects a smaller area of pixels on the display device 4.

The above-presented functions for applying the present invention can be largely implemented in the application software of the processor 2 of the electronic device. In addition, it is obvious that the electronic device can comprise more than one processor 2, wherein the functions according to the invention can be implemented in one or several processors.

The present invention is not limited solely to the above-presented embodiments, but it can be modified within the scope of the appended claims.

## Claims

1. A method for forming at least one information element on a display device of an electronic device on the basis of presentation information specified for the information element, **characterized in that** at least one change condition is determined for at least one information element, and that when said change condition is fulfilled, at least one visual property of the information element is changed.

2. The method according to claim 1, **characterized in that** the information element is formed at least partly transparent, wherein when the information element is output on the display device, the visual information at the output point remains at least partly visible.

3. The method according to claim 1 or 2, **characterized in that** the size of the information element is changed.

4. The method according to claim 1, 2 or 3, **characterized in that** at least one colour of the information element is changed.

5. The method according to claim 1 to 4, **characterized in that** the location of the information element on the display device is changed.

6. The method according to any of the claims 1 to 5, **characterized in that** the information element is supplemented with at least one plug-in function (12) which is activated in connection with a change in the visual property of the information element.

7. The method according to claim 6, **characterized in that** said plug-in function (12) comprises an image, wherein said image is presented on the display device in connection with a change in the information element.

8. The method according to claim 6 or 7, **characterized in that** said plug-in function (12) comprises text, wherein said text is presented on the display device in connection with a change in the information element.

9. The method according to claim 6, 7 or 8, in which the electronic device comprises means for executing application programs, **characterized in that** said plug-in function (12) comprises at least one application program, wherein said application program is activated in connection with a change in the information element.

10. The method according to any of the claims 1 to 9, in which means for detecting a touch are used in connection with the display device, **characterized in that** in the method a touch is detected, the location of the touch point on the display device is determined, and it is examined whether there is an information element at the touch point on the display device, wherein if there is an information element at the touch point, at least one visual property of this information element is changed.

11. The method according to any of the claims 1 to 10, **characterized in that** in the method at least two visual presentation formats are specified for the information element, wherein the visual properties of the information element are changed at intervals between said at least two presentation formats.

12. An electronic device comprising a display device (4) and means (2) for forming at least one information element on the display device (4) on the basis of presentation information determined for the information element, **characterized in that** at least one change condition is determined for at least one information element, and that the electronic device also comprises means (2) for changing at least one visual property of the information element when said change condition is fulfilled.

13. The electronic device according to claim 12, **characterized in that** the information element is arranged to be formed at least partly transparent, wherein the electronic device comprises means (2, 3) for at least partly combining the presentation information of the information element and the visual information at the output point on the display device (4).

14. The electronic device according to claim 12 or 13, **characterized in that** it comprises means (2) for changing the size of the information element.

15. The electronic device according to claim 12, 13 or 14, **characterized in that** it comprises means (2) for changing at least one colour of the information element.

16. The electronic device according to any of the claims 12 to 15, **characterized in that** it comprises means (2) for changing the location of the information element on the display device (4).

17. The electronic device according to any of the claims 12 to 16, **characterized in that** it comprises means (2, 3) for supplementing the information element with at least one plug-in function (12), and means (2, 6) for activating said plug-in function in connection with a change in a visual property of the information element.

18. The electronic device according to claim 17, **characterized in that** said plug-in function (12) comprises an image, wherein said image is arranged to be presented on the display device in connection with a change in the information element.

19. The electronic device according to claim 17 or 18, **characterized in that** said plug-in function (12) comprises text, wherein said text is presented on the display device in connection with a change in the information element.

20. The electronic device according to claim 17, 18 or 19, which electronic device comprises means for executing application programs, **characterized in that** said plug-in function (12) comprises at least one application program, wherein the electronic device comprises means (2, 3) for activating said application program in connection with a change in the information element.

21. The electronic device according to any of the claims 12 to 20, which comprises means (6) arranged in connection with the display device (4) for detecting a touch, **characterized in that** in the electronic device also comprises means (6) for determining the location of the touch point on the display device, means (2, 3) for determining whether there is an information element at the touch point on the display device (4), wherein if there is an information element at the touch point on the display device, at least one visual property of this information element is arranged to be changed.

22. The electronic device according to any of the claims 12 to 21, **characterized in that** at least two visual presentation formats are specified for the information element, wherein the electronic device comprises means (2, 3, 4) for changing the visual properties of the information element at intervals between said at least two presentation formats.

23. The electronic device according to any of the claims 12 to 22, **characterized in that** it comprises means (7) for performing the functions of a mobile station.
